# EUROPEAN PATENT SPECIFICATION

(11) **EP 3 107 005 B1**
(45) Date of publication and mention of the grant of the patent: **14.03.2018**
(21) Application number: 14893559.6
(22) Date of filing: 24.10.2014
(51) Int. Cl.: G06F 17/30

(54) **METHOD AND DEVICE FOR RECOVERING CHECKPOINT IN COPY ON WRITE BASED FILE SYSTEM**
VERFAHREN UND VORRICHTUNG ZUR PRÜFPUNKTWIEDERHERSTELLUNG IN EINEM COPY-ON-WRITE-DATEISYSTEM
PROCÉDÉ ET DISPOSITIF POUR RÉCUPÉRER UN POINT DE CONTRÔLE DANS UNE COPIE SUR UN SYSTÈME DE FICHIER BASÉ SUR L'ÉCRITURE

(30) Priority: 28.05.2014 CN 201410231326
(43) Date of publication of application: 21.12.2016
(73) Proprietor: HUAWEI TECHNOLOGIES CO., LTD., Guangdong 518129 (CN)
(72) Inventor: XIE, Yong, Shenzhen, Guangdong 518129 (CN); LI, Yuguo, Shenzhen, Guangdong 518129 (CN); ZHONG, Yanhui, Shenzhen, Guangdong 518129 (CN); FU, Xudong, Shenzhen, Guangdong 518129 (CN)
(74) Representative: Maiwald Patentanwalts GmbH
(86) International application number: PCT/CN2014/089458
(87) International publication number: WO 2015/180394

(56) References cited:
- CN-A- 1 532 707
- CN-A- 102 968 381
- CN-A- 103 678 715
- CN-A- 103 984 609
- US-A1- 2003 159 007
- US-A1- 2011 161 381
- US-A1- 2011 307 449
- US-B1- 8 533 158

## Description

### TECHNICAL FIELD

The present invention relates to the field of data processing, and in particular, to a checkpoint reclaim method and apparatus in a copy-on-write file system.

### BACKGROUND

Copy on write (COW for short) means that when data in a file system is to be altered, the original data is not really altered, and instead, the to-be-altered data is copied to a blank area of a magnetic disk. It can be seen that, because the original data is not damaged during a write process, data consistency can be guaranteed without write-twice penalty, and a problem of a small throughput of written data brought by the write-twice penalty is avoided. Therefore, COW file systems are applied increasingly widely.

In a COW file system, every time when a checkpoint or a snapshot is generated, traversal is performed downwards from a root of the checkpoint or the snapshot to perform reference count addition. If a reference count of a data block is not greater than 1 after being added by 1, traversal continues to be performed downwards; or if a reference count of a data block is greater than 1 after being added by 1, traversal is no longer performed downwards. In the COW file system, an uppermost layer including a reference tree is a super block (sb for short; English: super block), and what is referenced by a super block may be a checkpoint, a snapshot, a root area (ROOT), an index node (inode), or the like.

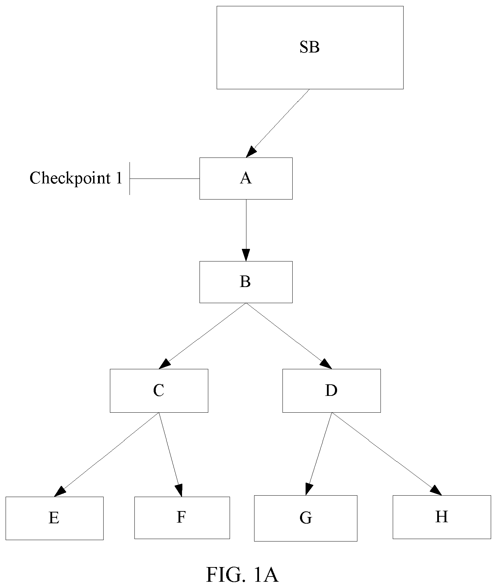

Referring to FIG. 1A, FIG. 1A is a schematic reference diagram of a COW file system with a checkpoint 1 in the prior art. As shown in FIG. 1A, the checkpoint 1 includes eight data blocks numbered A to H. After a reference count addition traversal operation is performed on the checkpoint 1, it can be known that reference counts of the data blocks are:

| **Data Block Number** | **Reference Count** |
|---|---|
| A | 1 |
| B | 1 |
| C | 1 |
| C | 1 |
| D | 1 |
| E | 1 |
| F | 1 |
| G | 1 |
| H | 1 |

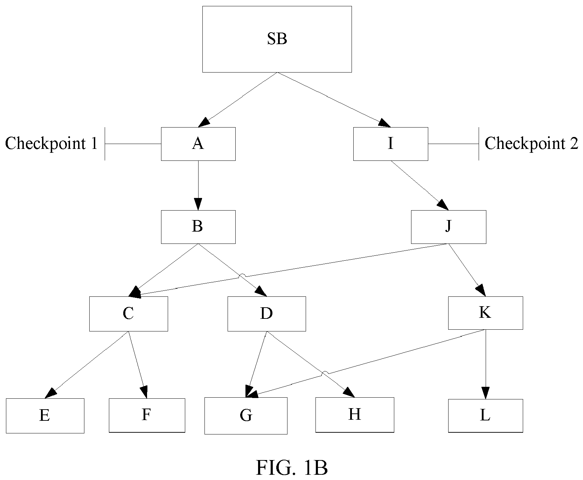

Referring to FIG. 1B, FIG. 1B is a schematic diagram of generating a checkpoint 2 on the basis of the checkpoint 1 in the prior art. As shown in FIG. 1B, the COW file system modifies a sub-block on the right of an index node 2 (that is, H is modified as L), and generates the checkpoint 2. After a reference count addition traversal operation is performed from a root of the checkpoint 2, it can be known that reference counts of data blocks are:

| **Data Block Number** | **Reference Count** |
|---|---|
| I | 1 |
| J | 1 |
| K | 1 |
| L | 1 |
| C | 2 |
| G | 2 |

When a checkpoint or a snapshot is to be deleted, traversal needs to be performed downwards from a root of the checkpoint or the snapshot to perform a reference count subtraction operation. If a reference count of a data block is 0 after being subtracted by 1, traversal continues to be performed downwards; or if a reference count of a data block is greater than 0 after being subtracted by 1, traversal is no longer performed downwards, where the data block whose reference count is 0 is a data block that needs to be reclaimed.

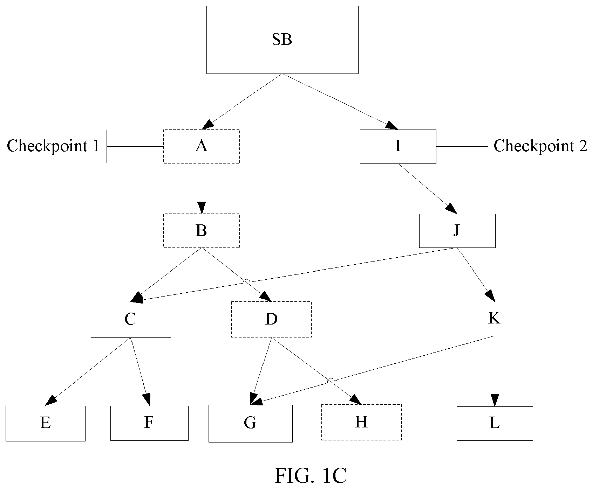

Deleting the checkpoint 1 shown in FIG. 1B is used as an example. Referring to FIG. 1C, FIG. 1C is a schematic diagram of deleting the checkpoint 1 in the prior art. As shown in FIG. 1C, after a reference count subtraction traversal operation is performed on the checkpoint 1, it can be known that reference counts of data blocks are:

| **Data Block Number** | **Reference Count** |
|---|---|
| A | 0 |
| B | 0 |
| C | 1 |
| C | 1 |
| D | 0 |
| E | 1 |
| F | 1 |
| G | 1 |
| H | 0 |

After a reference count subtraction traversal operation is performed on the checkpoint 1, it can be known that, after the checkpoint 1 is deleted, data blocks with numbers A, B, D, and H respectively have a reference count of 0 and need to be reclaimed; in this way, space occupied by these data blocks can be released. Prior art US 8533158 discloses a solution for reclaiming data space by rewriting metadata.

It can be seen that, in a COW file system, a reference count addition traversal operation needs to be performed on each generated checkpoint and each generated snapshot, and a reference count subtraction traversal operation needs to be performed on each deleted checkpoint and each deleted snapshot. As a result, a traversing scale and an amount of data that is calculated during traversal are both relatively large.

### SUMMARY

Embodiments of the present invention are defined in appended claims 1-8.

One or more technical solutions provided by the embodiments of the present invention have at least the following technical effects or advantages:
Because the following technical solution is used: obtaining, according to a checkpoint reclaim instruction, M data blocks allocated by the file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim, performing an addition operation with a fixed step on a reference count of a data block that needs to be reserved in the M data blocks, determining, in the M data blocks, a first data block that needs to be reclaimed, determining, in N data blocks allocated for at least one of a checkpoint or a snapshot reserved at the moment of the previous checkpoint reclaim, a second data block that needs to be reclaimed, where N is an integer not less than 1, and reclaiming the first data block and the second data block, no traversal operation needs to be performed on a data block that needs to be reclaimed in data blocks generated between the moment of the previous checkpoint reclaim and the moment of the current checkpoint reclaim in the COW file system; instead, a traversal operation needs to be performed only on a data block that needs to be reserved. Therefore, the following technical effects are achieved: a corresponding data amount is reduced when a traversal operation is performed on the data block that needs to be reclaimed in the data blocks generated between the moment of the previous checkpoint reclaim and the moment of the current checkpoint reclaim in the COW file system, and a traversing scale is reduced when the COW file system reclaims space.

### BRIEF DESCRIPTION OF DRAWINGS

FIG. 1A is a schematic reference diagram of a COW file system with a checkpoint 1 in the prior art;
FIG. 1B is a schematic diagram of generating a checkpoint 2 on the basis of a checkpoint 1 in the prior art;
FIG. 1C is a schematic diagram of deleting a checkpoint 1 in the prior art;
FIG. 2 is a flowchart of a checkpoint reclaim method according to an embodiment of the present invention;
FIG. 3 is a schematic diagram of data blocks reserved at a moment of a previous checkpoint reclaim in a COW file system according to an embodiment of the present invention;
FIG. 4 is a schematic diagram of a first-time modification of data blocks reserved at a moment of a previous checkpoint reclaim in a COW file system according to an embodiment of the present invention;
FIG. 5 is a schematic diagram of a second-time modification of data blocks reserved at a moment of a previous checkpoint reclaim in a COW file system according to an embodiment of the present invention;
FIG. 6 is a schematic diagram of a third-time modification of data blocks reserved at a moment of a previous checkpoint reclaim in a COW file system according to an embodiment of the present invention;
FIG. 7 is a schematic diagram of a COW file system that includes a cut-off root area at a moment of a previous checkpoint reclaim, a cut-off root area and a real-time root area at a moment of a current checkpoint reclaim according to an embodiment of the present invention;
FIG. 8 is a schematic diagram of a COW file system at a moment of a current checkpoint reclaim according to an embodiment of the present invention;
FIG. 9 is a schematic diagram of a COW file system after receiving a checkpoint reclaim instruction according to an embodiment of the present invention;
FIG. 10 is a schematic diagram of copying content in a cut-off root area at a moment of a current checkpoint reclaim to a cut-off root area at a moment of a previous checkpoint reclaim according to an embodiment of the present invention; and
FIG. 11 is a structural diagram of a checkpoint reclaim apparatus according to an embodiment of the present invention.

### DESCRIPTION OF EMBODIMENTS

Embodiments of the present invention provide a checkpoint reclaim method and apparatus in a copy-on-write file system, which are used to resolve a technical problem in the prior art that a traversing scale and an amount of data that is calculated during traversal are both relatively large in a COW file system.

Technical solutions in the embodiments of the present invention are used to resolve the foregoing technical problem, and a general idea is as follows:
The embodiments of the present invention provide a checkpoint reclaim method in a copy-on-write file system. The method includes: obtaining, according to a checkpoint reclaim instruction, M data blocks allocated by the file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim; performing an addition operation with a fixed step on a reference count of a data block that needs to be reserved in the M data blocks, and determining, in the M data blocks, a first data block that needs to be reclaimed; determining, in N data blocks allocated for at least one of a checkpoint or a snapshot reserved at the moment of the previous checkpoint reclaim, a second data block that needs to be reclaimed, where N is an integer not less than 1; and reclaiming the first data block and the second data block.

It can be seen from the foregoing part that, because the following technical solution is used: obtaining, according to a checkpoint reclaim instruction, M data blocks allocated by the file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim, performing an addition operation with a fixed step on a reference count of a data block that needs to be reserved in the M data blocks, determining, in the M data blocks, a first data block that needs to be reclaimed, determining, in N data blocks allocated for at least one of a checkpoint or a snapshot reserved at the moment of the previous checkpoint reclaim, a second data block that needs to be reclaimed, where N is an integer not less than 1, and reclaiming the first data block and the second data block, no traversal operation needs to be performed on a data block that needs to be reclaimed in data blocks generated between the moment of the previous checkpoint reclaim and the moment of the current checkpoint reclaim in the COW file system; instead, a traversal operation needs to be performed only on a data block that needs to be reserved. Therefore, the following technical effects are achieved: a corresponding data amount is reduced when a traversal operation is performed on the data block that needs to be reclaimed in the data blocks generated between the moment of the previous checkpoint reclaim and the moment of the current checkpoint reclaim in the COW file system, and a traversing scale is reduced when the COW file system reclaims space.

For a better understanding of the foregoing technical solution, the following describes the foregoing technical solution in detail with reference to the accompanying drawings in the specification and specific implementation manners.

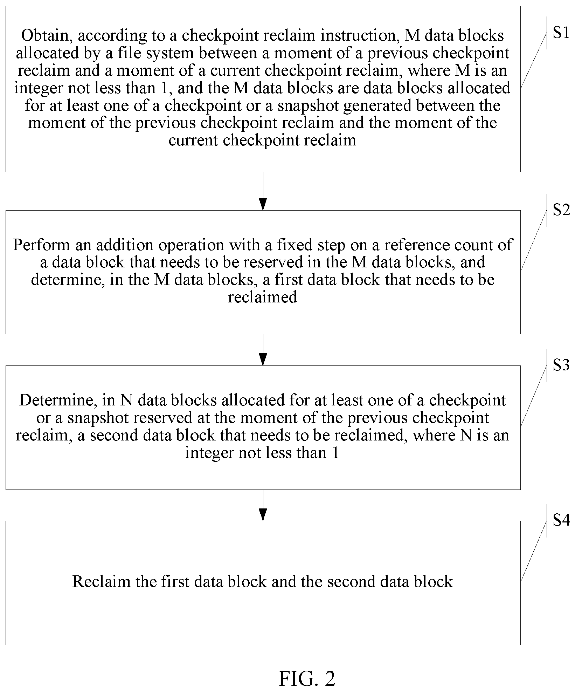

Referring to FIG. 2, FIG. 2 is a flowchart of a checkpoint reclaim method according to an embodiment of the present invention. As shown in FIG. 2, the method includes:
S1: Obtain, according to a checkpoint reclaim instruction, M data blocks allocated by a file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim.
S2: Perform an addition operation with a fixed step on a reference count of a data block that needs to be reserved in the M data blocks, and determine, in the M data blocks, a first data block that needs to be reclaimed.
S3: Determine, in N data blocks allocated for at least one of a checkpoint or a snapshot reserved at the moment of the previous checkpoint reclaim, a second data block that needs to be reclaimed, where N is an integer not less than 1.
S4: Reclaim the first data block and the second data block.

In a specific implementation process, the checkpoint reclaim method provided by this embodiment of the present invention is implemented in multiple implementation manners. In the following parts, two implementation manners are described in detail.

### Embodiment 1

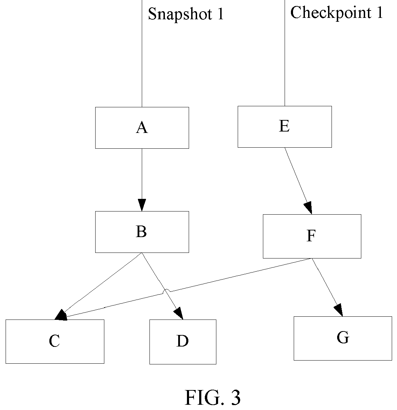

Referring to FIG. 3, FIG. 3 is a schematic diagram of data blocks reserved at a moment of a previous checkpoint reclaim in a COW file system according to an embodiment of the present invention. As shown in FIG. 3, the COW file system reserves a snapshot 1 and a checkpoint 1 at the moment of the previous checkpoint reclaim. The snapshot 1 includes four data blocks numbered A, B, C, and D; in other words, data blocks numbered A, B, C, and D are referenced by the snapshot 1. The checkpoint 1 includes four data blocks numbered E, F, C, and G; in other words, four data blocks numbered E, F, C, and G are referenced by the checkpoint 1. An addition operation with a fixed step is performed separately on the data blocks referenced by the snapshot 1 and the checkpoint 1. Here, a reference count addition traversal operation is performed and first referential reference counts at the moment of the previous checkpoint reclaim may be obtained. In this embodiment of the present invention, if a data block is referenced by the snapshot 1 or the checkpoint 1 once, a reference count is added by 1, that is, the fixed step is 1. In this embodiment, all reference counts are presented in a table form, and the first referential reference counts are as follows:

**Table 1**

| **Data Block Number** | **Reference Count** |
|---|---|
| A | 1 |
| B | 1 |
| C | 2 |
| D | 1 |
| E | 1 |
| F | 1 |
| G | 1 |

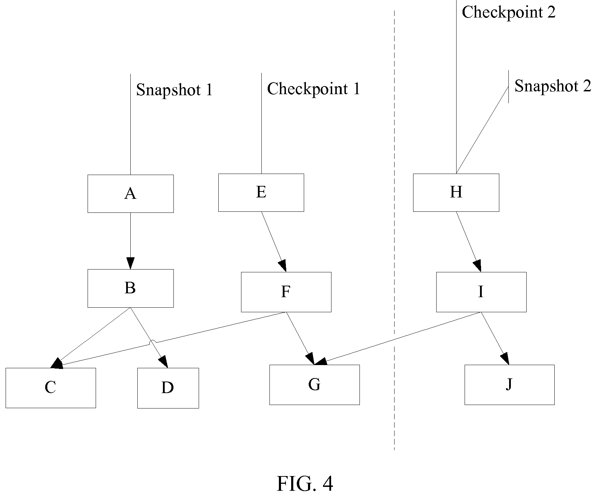

Referring to FIG. 4, FIG. 4 is a schematic diagram of a first-time modification of the data blocks reserved at the moment of the previous checkpoint reclaim in the COW file system according to this embodiment of the present invention. As shown in FIG. 4, the data block C is modified to J. In this case, a checkpoint 2 is generated. A snapshot is taken for the checkpoint 2, and then, a snapshot 2 shown in FIG. 4 may be generated.

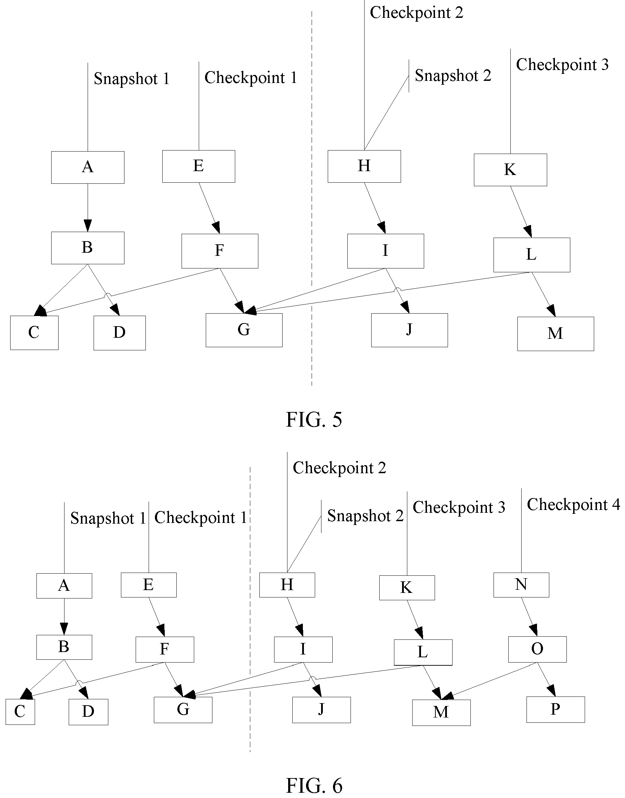

Referring to FIG. 5, FIG. 5 is a schematic diagram of a second-time modification of the data blocks reserved at the moment of the previous checkpoint reclaim in the COW file system according to this embodiment of the present invention. As shown in FIG. 5, the data block J is modified to M. In this case, a checkpoint 3 is generated.

Referring to FIG. 6, FIG. 6 is a schematic diagram of a third-time modification of the data blocks reserved at the moment of the previous checkpoint reclaim in the COW file system according to this embodiment of the present invention. As shown in FIG. 6, the data block numbered G is modified to a data block numbered P. In this case, a checkpoint 4 (Checkpoint 4) is generated.

It is assumed that the COW file system receives a checkpoint reclaim instruction at this time. In a specific implementation process, generation of the checkpoint reclaim instruction may be manually triggered by a user, or may be triggered by a reclaim policy of the COW file system, which is not limited herein.

Certainly, it should be noted that, in this embodiment, from the moment of the previous checkpoint reclaim in the COW file system to a moment at which the COW file system receives the checkpoint reclaim instruction, neither a traversal operation nor a reference count update operation is performed on the data blocks.

In step S1 of obtaining, according to a checkpoint reclaim instruction, M data blocks allocated by the file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim, specifically, the M data blocks allocated by the COW file system between the moment of the previous checkpoint reclaim and the moment of the current checkpoint reclaim may be obtained by using a data block allocation module in the COW file system. When the at least one of the checkpoint or the snapshot is generated between the moment of the previous checkpoint reclaim and the moment of the current checkpoint reclaim, the data block allocation module in the COW file system allocates corresponding numbers to data blocks that are corresponding to the at least one of the checkpoint or the snapshot. It can be known from FIG. 3 to FIG. 6 that, one checkpoint or snapshot corresponds to multiple data blocks. Therefore, M is an integer not less than 1.

It should be noted that, "allocate" in this embodiment means that, when the copy-on-write file system generates a checkpoint or a snapshot and when the checkpoint or the snapshot references data blocks corresponding to an existing checkpoint or snapshot, the data blocks are also data blocks allocated for the newly generated checkpoint or snapshot.

In this embodiment, referring to FIG. 3, FIG. 4, FIG. 5, and FIG. 6, information that numbers of data blocks already allocated between the moment of the previous checkpoint reclaim and the moment of the current checkpoint reclaim are G to P can be obtained from the data block allocation module in the COW file system. Because consecutive data block numbers are allocated by the data block allocation module in the COW file system, the data block allocation module may record only the first data block number and the last data block number that are allocated by the COW file system between the moment of the previous checkpoint reclaim and the moment of the current checkpoint reclaim, and such record manner occupies small space.

In step S2 of performing an addition operation with a fixed step on a reference count of a data block that needs to be reserved in the M data blocks, and determining, in the M data blocks, a first data block that needs to be reclaimed, specifically, when only a checkpoint is generated between the moment of the previous checkpoint reclaim and the moment of the current checkpoint reclaim, the addition operation with the fixed step is performed on reference counts of K data blocks allocated for a latest currently generated checkpoint, where the step is 1 herein, to obtain first reference counts of the K data blocks, and the first data block is determined in data blocks of the M data blocks except the K data blocks; or when both a checkpoint and a snapshot are generated between the moment of the previous checkpoint reclaim and the moment of the current checkpoint reclaim, the addition operation with the fixed step is performed on reference counts of K data blocks allocated for the snapshot generated between the moment of the previous checkpoint reclaim and the moment of the current checkpoint reclaim and for a latest currently generated checkpoint, where the fixed step is 1 herein, to obtain first reference counts of the K data blocks, and the first data block is determined in data blocks of the M data blocks except the K data blocks.

Because the COW file system generally reserves all snapshots and also reserves only a last generated checkpoint, in this embodiment, referring to FIG. 3, FIG. 4, FIG. 5, and FIG. 6, the snapshot 2 and the checkpoint 4 need to be reserved. Therefore, the addition operation with the fixed step needs to be performed on reference counts of K data blocks corresponding to the snapshot 2 and the checkpoint 4, to obtain first reference counts of the K data blocks. Specifically, a reference count addition traversal operation is performed on the K data blocks corresponding to the snapshot 2 and the checkpoint 4, so as to obtain the first reference counts of the data blocks corresponding to the snapshot number and the checkpoint number. In this embodiment of the present invention, numbers of the data blocks allocated for the snapshot 2 and the checkpoint 4 are G, H, I, J, M, N, O, and P. After the reference count addition traversal operation is performed on the data blocks corresponding to the snapshot 2 and the checkpoint 4, the first reference counts of the data blocks referenced by the snapshot 2 and the checkpoint 4 can be obtained:

**Table 2**

| **Data Block Number** | **Reference Count** |
|---|---|
| G | 1 |
| H | 1 |
| I | 1 |
| J | 1 |
| M | 1 |
| N | 1 |
| O | 1 |
| P | 1 |

The numbers of the data blocks that are already allocated by the COW file system between the moment of the previous checkpoint reclaim and the moment of the current checkpoint reclaim and that are obtained in step S1 are G to P. Therefore, with reference to the first reference counts, it can be determined that numbers, of data blocks that can be reclaimed, in the numbers of the data blocks already allocated by the COW file system between the moment of the previous checkpoint reclaim and the moment of the current checkpoint reclaim are K and L (because they are referenced by neither the checkpoint 4 nor the snapshot 2 that needs to be reserved), that is, numbers of first data blocks are K and L.

Certainly, as introduced in the foregoing part, in this embodiment, both the checkpoint and the snapshot are generated between the moment of the previous checkpoint reclaim and the moment of the current checkpoint reclaim. Therefore, according to the steps introduced in the foregoing part, the numbers of the data blocks allocated for the snapshot 2 and the checkpoint 4 are G, H, I, J, M, N, O, and P, so that the first data block that needs to be reclaimed can be determined in the data blocks of the M data blocks except the K data blocks. In this embodiment of the present invention, because the checkpoint 3 needs to be reclaimed, it is determined from data blocks numbered K and L that, numbers of data blocks that need to be reclaimed are K and L. In another embodiment, when only a checkpoint is generated between the moment of the previous checkpoint reclaim and the moment of the current checkpoint reclaim, an addition operation with a fixed step is performed only on reference counts of K data blocks allocated for a latest currently generated checkpoint, where the fixed step is 1, so as to obtain first reference counts of the K data blocks. Therefore, a first data block may be determined in data blocks of M data blocks except the K data blocks. Details are not described herein again.

After step S2 of determining, in the M data blocks, a first data block that needs to be reclaimed, in this embodiment of the present invention, step S3 is performed: determining, in N data blocks allocated for at least one of a checkpoint or a snapshot reserved at the moment of the previous checkpoint reclaim, a second data block that needs to be reclaimed, where N is an integer not less than 1.

Specifically, step S3 may include: performing a subtraction operation with the fixed step on reference counts of L data blocks, in the N data blocks, allocated for a checkpoint reserved at the moment of the previous checkpoint reclaim, and determining current reference counts of the L data blocks, where the fixed step is 1 herein; before the first reference counts of data blocks referenced by the snapshot 2 and the checkpoint 4 are obtained, reference counts of the N data blocks are first referential reference counts; and determining the second data block in the N data blocks according to the first reference counts, the current reference counts of the L data blocks, and the first referential reference counts.

In this embodiment, specifically, as introduced in the foregoing part, Table 1 lists the first referential reference counts at the moment of the previous checkpoint reclaim in the COW file system. After the first referential reference counts are obtained, the subtraction operation with the fixed step may be performed on the reference counts of the L data blocks, in the N data blocks, allocated for the checkpoint reserved at the moment of the previous checkpoint reclaim, where the fixed step is 1 herein. That is, a reference count subtraction traversal operation is performed on the L data blocks corresponding to the checkpoint. For example, referring to FIG. 6, the subtraction operation with the fixed step is performed on the data blocks, corresponding to the checkpoint 1, in the data blocks reserved at the moment of the previous checkpoint reclaim, that is, the reference count subtraction traversal operation is performed, to obtain second reference counts of the four data blocks, allocated for the checkpoint 1, in the N data blocks, as shown in the following table:

**Table 3**

| **Data Block Number** | **Reference Count** |
|---|---|
| C | -1 |
| E | -1 |
| F | -1 |
| G | -1 |

After the second reference counts are obtained, the second data block can be determined in the N data blocks according to the first referential reference counts (Table 1), the first reference counts (Table 2), and the second reference counts (Table 3). Specifically, the first referential reference counts, the first reference counts, and the second reference counts may be merged. In this embodiment, "merging the first referential reference counts, the first reference counts, and the second counts" means merging reference counts, of a same data block, in the first referential reference counts, the first reference counts, and the second reference counts, and reserving reference counts of a different data block. Results are shown in the following table:

**Table 4**

| **Data Block Number** | **Reference Count** |
|---|---|
| A | 1 |
| B | 1 |
| C | 1 |
| D | 1 |
| E | 0 |
| F | 0 |
| G | 1 |
| H | 1 |
| I | 1 |
| J | 1 |
| M | 1 |
| N | 1 |
| O | 1 |
| P | 1 |

It can be determined from Table 4 that, data blocks numbered E and F in the data blocks reserved at the moment of the previous checkpoint reclaim are data blocks that need to be reclaimed, that is, second data blocks are E and F.

It can be seen from the foregoing part that, compared with a traversing scale in a COW file system in the prior art, in the checkpoint reclaim method provided by this embodiment of the present invention, no traversal operation needs to be performed on a data block that needs to be reclaimed in data blocks generated between a moment of a previous checkpoint reclaim and a moment of a current checkpoint reclaim in a COW file system; instead, a traversal operation needs to be performed only on a data block that needs to be reserved. Therefore, the following technical effects are achieved: a corresponding data amount is reduced when a traversal operation is performed on the data block that needs to be reclaimed in the data blocks generated between the moment of the previous checkpoint reclaim and the moment of the current checkpoint reclaim in the COW file system, and a traversing scale is reduced when the COW file system reclaims space.

After the second data block is determined, the checkpoint reclaim method provided by this embodiment of the present invention further includes: determining a reference count of a data block that needs to be reserved for the current checkpoint reclaim as a current first referential reference count according to the first reference counts of the K data blocks, the first referential reference counts of the N data blocks, and the current reference counts of the L data blocks. That is, after the COW file system determines the first data block and the second data block that need to be reclaimed, the reference count of the data block that needs to be reserved for the current checkpoint reclaim can be determined as the current first referential reference count (that is, content shown in Table 4) according to the first reference counts, the second reference counts, and the first referential reference counts, so as to be used by the COW file system for a next checkpoint reclaim. Details are not described herein again.

After a number of the first data block that needs to be reclaimed is determined in step S2 and a number of the second data block that needs to be reclaimed is determined in step S3, in the checkpoint reclaim method provided by this embodiment of the present invention, step S4 is performed: reclaiming the first data block and the second data block.

That is, in step S4, the data blocks numbered E and F are reclaimed and the data blocks numbered K and L are reclaimed; details are not described herein again.

The foregoing technical solution in this embodiment of the present invention has at least the following technical effects or advantages:
Because the following technical solution is used: obtaining, according to a checkpoint reclaim instruction, M data blocks allocated by the file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim, performing an addition operation with a fixed step on a reference count of a data block that needs to be reserved in the M data blocks, determining, in the M data blocks, a first data block that needs to be reclaimed, determining, in N data blocks allocated for at least one of a checkpoint or a snapshot reserved at the moment of the previous checkpoint reclaim, a second data block that needs to be reclaimed, where N is an integer not less than 1, and reclaiming the first data block and the second data block, no traversal operation needs to be performed on a data block that needs to be reclaimed in data blocks generated between the moment of the previous checkpoint reclaim and the moment of the current checkpoint reclaim in the COW file system; instead, a traversal operation needs to be performed only on a data block that needs to be reserved. Therefore, the following technical effects are achieved: a corresponding data amount is reduced when a traversal operation is performed on the data block that needs to be reclaimed in the data blocks generated between the moment of the previous checkpoint reclaim and the moment of the current checkpoint reclaim in the COW file system, and a traversing scale is reduced when the COW file system reclaims space.

### Embodiment 2

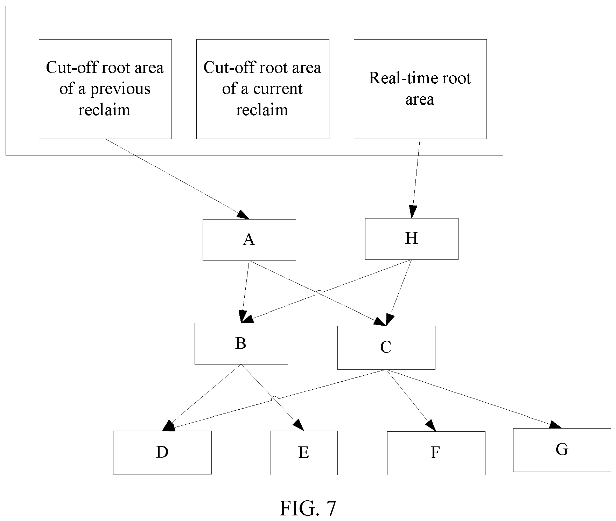

Referring to FIG. 7, FIG. 7 is a schematic diagram of a COW file system that includes a cut-off root area at a moment of a previous checkpoint reclaim, a cut-off root area at a moment of a current checkpoint reclaim, and a real-time root area according to an embodiment of the present invention. As shown in FIG. 7, the cut-off root area at the moment of the previous checkpoint reclaim is a root area in which N data blocks are indexed, the real-time root area is a root area in which K data blocks are indexed, and the cut-off root area at the moment of the current checkpoint reclaim is a root area in which the file system copies, when obtaining the checkpoint reclaim instruction, an indexing relationship that is in the real-time root area. Certainly, it should be noted that, in this embodiment, generation and deletion of a snapshot or a checkpoint in the COW file system are implemented by means of insertion and deletion of a tree of the COW file system, where the snapshot or the checkpoint mounts a root area of the COW file system, so as to ensure that no missing occurs when space corresponding to a data block that needs to be reclaimed is reclaimed according to the tree of the COW file system.

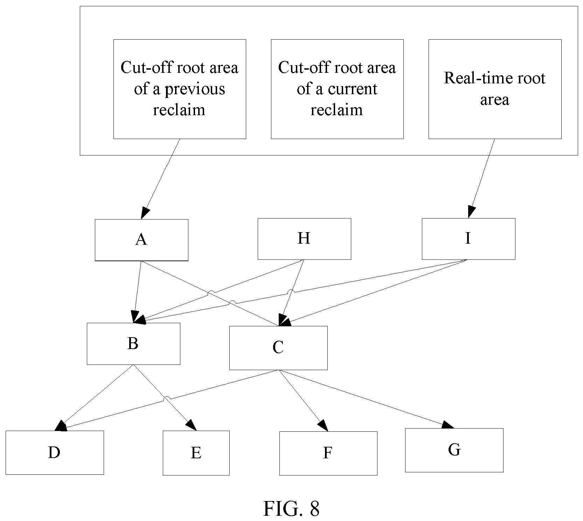

As shown in FIG. 7, data in the cut-off root area at the moment of the previous checkpoint reclaim is indexes for data blocks reserved at a moment of the previous checkpoint reclaim in the COW file system. Because there is only a checkpoint at the moment of the previous checkpoint reclaim in the COW file system, numbers of data blocks referenced by the reserved checkpoint include A, B, C, D, E, F, and G. In this embodiment, that data in the real-time root area is indexes for data blocks allocated for a newly generated checkpoint by the COW file system after the moment of the previous checkpoint reclaim is used as an example. Numbers of the data blocks allocated for the newly generated checkpoint after the moment of the previous checkpoint reclaim are B, C, D, F, G, and H, and numbers of data blocks directly or indirectly referenced by a data block numbered H are B, C, D, E, F, and G. Referring to FIG. 8, FIG. 8 is a schematic diagram of the COW file system at a moment of the current checkpoint reclaim according to this embodiment of the present invention. As shown in FIG. 8, compared with the moment of the previous checkpoint reclaim, the COW file system undergoes some transactions and generates another checkpoint at the moment of the current checkpoint reclaim, where numbers of data blocks allocated for the newly generated checkpoint are B, C, D, F, G, and I, and an index for the data block numbered I is in the real-time root area.

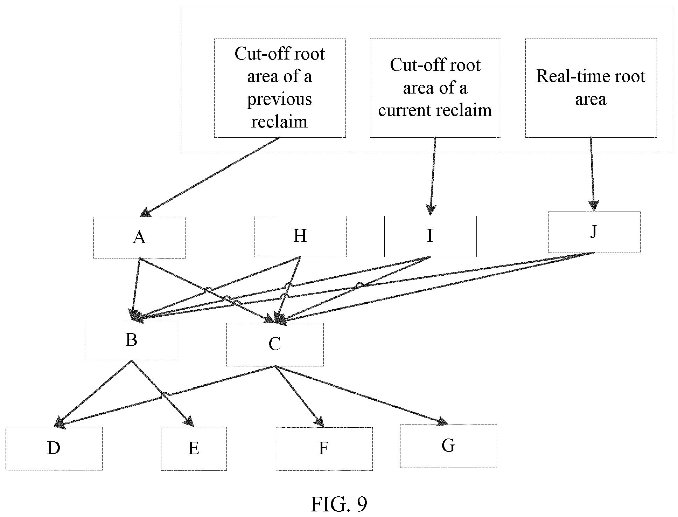

Referring to FIG. 9, FIG. 9 is a schematic diagram of the COW file system after receiving a checkpoint reclaim instruction according to this embodiment of the present invention. As shown in FIG. 9, after receiving the checkpoint reclaim instruction, the COW file system copies data in the real-time root area shown in FIG. 8 to the cut-off root area of the current checkpoint reclaim. The data in the real-time root area refers to the index for the data block numbered I and indexes for data blocks directly or indirectly referenced by the data block numbered I shown in FIG. 8, that is, indexes for the data blocks numbered B, C, D, F, G, and I. Certainly, as shown in FIG. 9, after receiving the checkpoint reclaim instruction, the COW file system continues to index, in the real-time root area according to a running status of the COW file system, a data block newly added after the moment of the current checkpoint reclaim, for example, a data block numbered J shown in FIG. 9. Details are not described herein again.

As shown in FIG. 9, after the data in the real-time root area is copied to the cut-off root area at the moment of the current checkpoint reclaim, a reference count addition traversal operation can be performed on the data blocks in the cut-off root area at the moment of the current checkpoint reclaim (it should be noted that, impact of the real-time root area does not need to be considered at this time, that is, a reference relationship of the data block numbered J is not counted). Obtained reference counts of the data blocks are as follows:

**Table 5**

| **Data Block Number** | **Reference Count** |
|---|---|
| I | 1 |
| B | 2 |
| C | 2 |
| D | 1 |
| E | 1 |
| F | 1 |
| G | 1 |

In step S1, M data blocks already allocated by the COW file system between the moment of the previous checkpoint reclaim and the moment of the current checkpoint reclaim are obtained. Specifically, similar to the process in Embodiment 1, the M data blocks may also be obtained by using a data block allocation module of the COW file system. A detailed process is already introduced in Embodiment 1, and details are not described herein again for conciseness of the specification.

In this embodiment, it can be known from the data block allocation module of the COW file system that, numbers of the M data blocks already allocated by the COW file system between the moment of the previous checkpoint reclaim and the moment of the current checkpoint reclaim are B to I respectively.

After the data blocks already allocated by the COW file system between the moment of the previous checkpoint reclaim and the moment of the current checkpoint reclaim are obtained in step S1, in a checkpoint reclaim method provided by this embodiment of the present invention, step S2 is performed: performing an addition operation with a fixed step on a reference count of a data block that needs to be reserved in the M data blocks, and determining, in the M data blocks, a first data block that needs to be reclaimed. As shown in FIG. 9, because only the checkpoint is generated, only a latest checkpoint needs to be reserved. In a cut-off root area, numbers of data blocks referenced by the latest checkpoint are B, C, D, F, G, and I. Therefore, in the M data blocks, data blocks numbered B, C, D, F, G, and I need to be reserved, and a data block numbered H is a data block that can be reclaimed.

In this embodiment, because the numbers of the data blocks already allocated by the COW file system between the moment of the previous checkpoint reclaim and the moment of the current checkpoint reclaim are B to I, with reference to Table 5, it can be known that the data block numbered H is a first data block that needs to be reclaimed. When the reference count addition traversal operation is performed on data blocks indexed in the cut-off root area at the moment of the current checkpoint reclaim, because not being referenced, the data block numbered H does not need to be reserved; in addition, the reference count addition traversal operation does not need to be performed on the data block numbered H, and a reference count subtraction traversal operation does not need to be performed on the data block numbered H during the reclaim either. Nevertheless, in the prior art, the reference count addition traversal operation and the reference count subtraction traversal operation are separately performed on the data block numbered H.

After a number of the first data block that needs to be reclaimed is determined in step S2, in the checkpoint reclaim method provided by this embodiment of the present invention, step S3 is performed: determining, in N data blocks allocated for at least one of a checkpoint or a snapshot reserved at the moment of the previous checkpoint reclaim, a second data block that needs to be reclaimed, where N is an integer not less than 1.

Specifically, in this embodiment, because there is only a checkpoint, the reference count subtraction traversal operation may be performed on data blocks referenced by a checkpoint indexed in the cut-off root area of the previous checkpoint reclaim, and results are as follows:

**Table 6**

| **Data Block Number** | **Reference Count** |
|---|---|
| A | 0 |
| B | 1 |
| C | 1 |
| D | 1 |
| E | 1 |
| F | 1 |
| G | 1 |

It can be seen from Table 6 that, a data block numbered A is a data block that is no longer referenced, and the data block numbered A is a data block that needs to be reclaimed, that is, A is a number of the second data block.

After the first data block that needs to be reclaimed is determined in step S2 and the second data block that needs to be reclaimed is determined in step S3, in the checkpoint reclaim method provided by this embodiment of the present invention, step S4 is performed: reclaiming the first data block and the second data block.

Similar to Embodiment 1, in this embodiment, reclaiming first space corresponding to the number of the first data block is reclaiming space corresponding to the data block numbered H, and reclaiming second space corresponding to the number of the second data block is reclaiming space corresponding to the data block numbered A. For conciseness of the specification, details are not described herein again.

In a specific implementation process, after the first space corresponding to the number of the first data block and the second space corresponding to the number of the second data block are reclaimed, the method further includes: deleting data in the cut-off root area at the moment of the previous checkpoint reclaim; and copying data in the cut-off root area at the moment of the current checkpoint reclaim to the cut-off root area at the moment of the previous checkpoint reclaim.

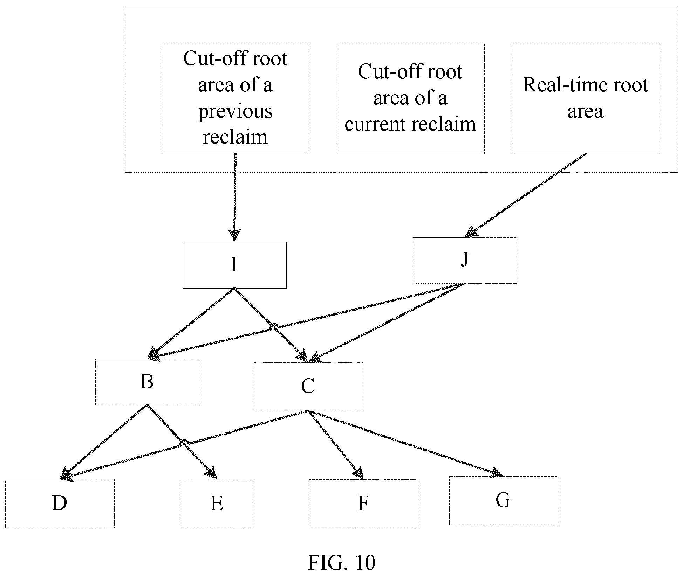

Specifically, still referring to FIG. 9, as shown in FIG. 9, after the COW file system completes the checkpoint reclaim, the cut-off root area at the moment of the previous checkpoint reclaim is cleared, for example, indexes in the cut-off root area at the moment of the previous checkpoint reclaim are deleted; and the data in the cut-off root area at the moment of the current checkpoint reclaim such as index information of a data block is copied to the cut-off root area at the moment of the previous checkpoint reclaim, so as to be used by the COW file system during a next space reclaim. Referring to FIG. 10, FIG. 10 is a schematic diagram of copying the data in the cut-off root area at the moment of the current checkpoint reclaim to the cut-off root area at the moment of the previous checkpoint reclaim according to this embodiment of the present invention, and details are not described herein again.

In a specific implementation process, if a checkpoint or a snapshot is already deleted, its index no longer exists in the cut-off root area at the moment of the current checkpoint reclaim (for example, after a new checkpoint is generated, an old checkpoint is no longer indexed). When a reference count subtraction traversal operation is performed downwards from the cut-off root area at the moment of the previous checkpoint reclaim, it is found that a reference count of the checkpoint or the snapshot is 0, and subtraction continues to be performed downwards. Besides, if a checkpoint or a snapshot is currently reserved (for example, if a snapshot is not deleted after being generated, an index for the snapshot always exists in the real-time root area), its index exists in the cut-off root area at the moment of the current checkpoint reclaim. When the reference count subtraction traversal operation is performed downwards from the cut-off root area at the moment of the previous checkpoint reclaim, it is found that a reference count of the checkpoint or the snapshot is not 0, and subtraction is no longer performed downwards. Therefore, after receiving the checkpoint reclaim instruction, the COW file system canreclaim complete space reclaim according to an index status in the real-time root area without knowing which checkpoint or snapshot needs to be reclaimed.

The foregoing technical solution in this embodiment of the present invention has at least the following technical effects or advantages:
Because the following technical solution is used: obtaining, according to a checkpoint reclaim instruction, M data blocks allocated by a file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim, performing an addition operation with a fixed step on a reference count of a data block that needs to be reserved in the M data blocks, determining, in the M data blocks, a first data block that needs to be reclaimed, determining, in N data blocks allocated for at least one of a checkpoint or a snapshot reserved at the moment of the previous checkpoint reclaim, a second data block that needs to be reclaimed, where N is an integer not less than 1, and reclaiming the first data block and the second data block, no traversal operation needs to be performed on a data block that needs to be reclaimed in data blocks generated between the moment of the previous checkpoint reclaim and the moment of the current checkpoint reclaim in the COW file system; instead, a traversal operation needs to be performed only on a data block that needs to be reserved. Therefore, the following technical effects are achieved: a corresponding data amount is reduced when a traversal operation is performed on the data block that needs to be reclaimed in the data blocks generated between the moment of the previous checkpoint reclaim and the moment of the current checkpoint reclaim in the COW file system, and a traversing scale is reduced when the COW file system reclaims space.

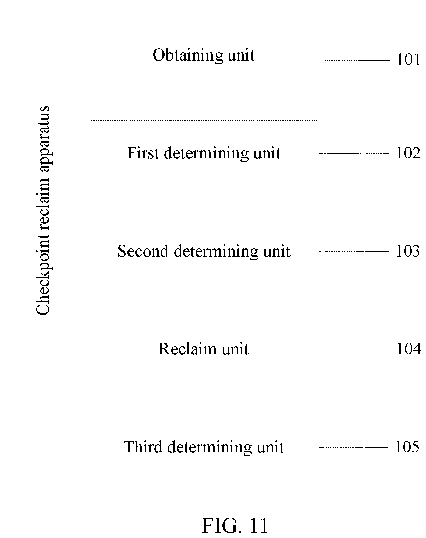

Based on the same invention idea, an embodiment of the present invention further provides a checkpoint reclaim apparatus in a copy-on-write file system. Referring to FIG. 11, FIG. 11 is a module diagram of the apparatus according to this embodiment of the present invention. As shown in FIG. 11, the apparatus includes:
an obtaining unit 101, configured to obtain, according to a checkpoint reclaim instruction, M data blocks allocated by the file system between a moment of a previous checkpoint reclaim and a moment of a current checkpoint reclaim, where M is an integer not less than 1, and the M data blocks are data blocks allocated for at least one of a checkpoint or a snapshot generated between the moment of the previous checkpoint reclaim and the moment of the current checkpoint reclaim;
a first determining unit 102, configured to perform an addition operation with a fixed step on a reference count of a data block that needs to be reserved in the M data blocks, and determine, in the M data blocks, a first data block that needs to be reclaimed;
a second determining unit 103, configured to determine, in N data blocks allocated for at least one of a checkpoint or a snapshot reserved at the moment of the previous checkpoint reclaim, a second data block that needs to be reclaimed, where N is an integer not less than 1; and
a reclaim unit 104, configured to reclaim the first data block and the second data block.

In a specific implementation process, the first determining unit 102 is specifically configured to: when only a checkpoint is generated between the moment of the previous checkpoint reclaim and the moment of the current checkpoint reclaim, perform the addition operation with the fixed step on reference counts of K data blocks allocated for a latest currently generated checkpoint, to obtain first reference counts of the K data blocks, and determine the first data block in data blocks of the M data blocks except the K data blocks; or when both a checkpoint and a snapshot are generated between the moment of the previous checkpoint reclaim and the moment of the current checkpoint reclaim, perform the addition operation with the fixed step on reference counts of K data blocks allocated for the snapshot generated between the moment of the previous checkpoint reclaim and the moment of the current checkpoint reclaim and for a latest currently generated checkpoint, to obtain first reference counts of the K data blocks, and determine the first data block in data blocks of the M data blocks except the K data blocks.

In a specific implementation process, the second determining unit 103 is specifically configured to: perform a subtraction operation with the fixed step on reference counts of L data blocks, in the N data blocks, allocated for a checkpoint reserved at the moment of the previous checkpoint reclaim, and determine current second counts of the L data blocks, where before the obtaining first reference counts of the K data blocks, reference counts of the N data blocks are first referential reference counts; and determine the second data block in the N data blocks according to the first reference counts, the second reference counts, and the first referential reference counts.

In a specific implementation process, the apparatus further includes a third determining unit 105, where the third determining unit 105 is configured to determine a reference count of a data block that needs to be reserved for the current checkpoint reclaim as a current first referential reference count according to the first reference counts, the second reference counts, and the first referential reference counts.

In a specific implementation process, when the file system includes a cut-off root area of the previous checkpoint reclaim, a cut-off root area of the current checkpoint reclaim, and a real-time root area, the cut-off root area of the previous checkpoint reclaim is a root area in which the N data blocks are indexed, the real-time root area is a root area in which the K data blocks are indexed, and the cut-off root area of the current checkpoint reclaim is a root area in which the file system copies, when obtaining the checkpoint reclaim instruction, an indexing relationship that is in the real-time root area.

In a specific implementation process, the reclaim unit 104 is further specifically configured to: delete data in the cut-off root area of the previous checkpoint reclaim, and copy data in the cut-off root area of the current checkpoint reclaim to the cut-off root area of the previous checkpoint reclaim.

It should be noted that, the apparatus in this embodiment and the method in the foregoing embodiments are two aspects based on the same invention idea. An implementation process of the method has been described in detail above. Therefore, a person skilled in the art can clearly understand a structure and an implementation process of the apparatus in this embodiment according to the foregoing description. For conciseness of the specification, details are not described herein again.

In this embodiment of the present invention, a symbol representing a quantity of data blocks is the same as a symbol representing a number of a data block, but each has an independent meaning. The symbol representing a quantity of data blocks is used to represent a quantity of data blocks, while the symbol representing a number of a data block is only used to distinguish different data blocks. A number of a data block may also be represented in another form, for example, a digit or a character string. Besides, for the addition operation with the fixed step and the subtraction operation with the fixed step, performed on the data block, mentioned in this embodiment of the present invention, the step may be 1. A meaning of performing the addition operation with the fixed step on the data block is the same as a meaning of performing a reference count addition operation on the data block, and a meaning of performing the subtraction operation with the fixed step on the data block is the same as a meaning of performing a reference count subtraction operation on the data block. Specifically, when the reference count addition operation is performed on a data block referenced by a snapshot and/or a checkpoint that needs to be reserved, that is, when the data block is referenced by the snapshot or the checkpoint once, a reference count is added by 1, and the data block is a data block allocated for the snapshot or checkpoint.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A checkpoint reclaim method in a copy-on-write file system, comprising:
obtaining (S1), according to a checkpoint reclaim instruction, M data blocks allocated by the file system between a moment of a previous checkpoint reclaim and a moment of a current checkpoint reclaim, wherein M is an integer not less than 1, and the M data blocks are data blocks allocated for at least one of a checkpoint or a snapshot generated between the moment of the previous checkpoint reclaim and the moment of the current checkpoint reclaim;
performing (S2) an addition operation with a fixed step on a reference count of a data block that needs to be reserved in the M data blocks, and determining, in the M data blocks, a first data block that needs to be reclaimed;
determining (S3), in N data blocks allocated for at least one of a checkpoint or a snapshot reserved at the moment of the previous checkpoint reclaim, a second data block that needs to be reclaimed, wherein N is an integer not less than 1; and
reclaiming (S4) the first data block and the second data block;
wherein the performing an addition operation with a fixed step on a reference count of a data block that needs to be reserved in the M data blocks, and determining, in the M data blocks, a first data block that needs to be reclaimed specifically comprises:
when only a checkpoint is generated between the moment of the previous checkpoint reclaim and the moment of the current checkpoint reclaim, performing the addition operation with the fixed step on reference counts of K data blocks allocated for a latest currently generated checkpoint, to obtain first reference counts of the K data blocks; and determining the first data block in data blocks of the M data blocks except the K data blocks;
when both a checkpoint and a snapshot are generated between the moment of the previous checkpoint reclaim and the moment of the current checkpoint reclaim, performing the addition operation with the fixed step on reference counts of K data blocks allocated for the snapshot generated between the moment of the previous checkpoint reclaim and the moment of the current checkpoint reclaim and for a latest currently generated checkpoint, to obtain first reference counts of the K data blocks; and determining the first data block in data blocks of the M data blocks except the K data blocks;
wherein the determining, in N data blocks allocated for at least one of a checkpoint or a snapshot reserved at the moment of the previous checkpoint reclaim, a second data block that needs to be reclaimed specifically comprises:
performing a subtraction operation with the fixed step on reference counts of L data blocks, in the N data blocks, allocated for a checkpoint reserved at the moment of the previous checkpoint reclaim, and determining second reference counts of the L data blocks, wherein before the obtaining first reference counts of the K data blocks, reference counts of the N data blocks are first referential reference counts; and
determining the second data block in the N data blocks according to the first reference counts, the second reference counts, and the first referential reference counts.

2. The method according to claim 1, wherein the method further comprises:
determining a reference count of a data block that needs to be reserved for the current checkpoint reclaim as a current first referential reference count according to the first reference counts, the second reference counts, and the first referential reference counts.

3. The method according to claim 1, wherein when the file system comprises a cut-off root area of the previous checkpoint reclaim, a cut-off root area of the current checkpoint reclaim, and a real-time root area, the cut-off root area of the previous checkpoint reclaim is a root area in which the N data blocks are indexed, the real-time root area is a root area in which the K data blocks are indexed, and the cut-off root area of the current checkpoint reclaim is a root area in which the file system copies, when obtaining the checkpoint reclaim instruction, an indexing relationship that is in the real-time root area.

4. The method according to claim 3, wherein after the reclaiming the first data block and the second data block, the method further comprises:
deleting data in the cut-off root area of the previous checkpoint reclaim; and
copying data in the cut-off root area of the current checkpoint reclaim to the cut-off root area of the previous checkpoint reclaim.

5. A checkpoint reclaim apparatus in a copy-on-write file system, comprising:
an obtaining unit (101), configured to obtain, according to a checkpoint reclaim instruction, M data blocks allocated by the file system between a moment of a previous checkpoint reclaim and a moment of a current checkpoint reclaim, wherein M is an integer not less than 1, and the M data blocks are data blocks allocated for at least one of a checkpoint or a snapshot generated between the moment of the previous checkpoint reclaim and the moment of the current checkpoint reclaim;
a first determining unit (102), configured to perform an addition operation with a fixed step on a reference count of a data block that needs to be reserved in the M data blocks, and determine, in the M data blocks, a first data block that needs to be reclaimed;
a second determining unit (103), configured to determine, in N data blocks allocated
for at least one of a checkpoint or a snapshot reserved at the moment of the previous checkpoint reclaim, a second data block that needs to be reclaimed, wherein N is an integer not less than 1; and
a reclaim unit (104), configured to reclaim the first data block and the second data block;
wherein the first determining unit (102) is specifically configured to: when only a checkpoint is generated between the moment of the previous checkpoint reclaim and the moment of the current checkpoint reclaim, perform the addition operation with the fixed step on reference counts of K data blocks allocated for a latest currently generated checkpoint, to obtain first reference counts of the K data blocks, and determine the first data block in data blocks of the M data blocks except the K data blocks; when both a checkpoint and a snapshot are generated between the moment of the previous checkpoint reclaim and the moment of the current checkpoint reclaim, perform the addition operation with the fixed step on reference counts of K data blocks allocated for the snapshot generated between the moment of the previous checkpoint reclaim and the moment of the current checkpoint reclaim and for a latest currently generated checkpoint, to obtain first reference counts of the K data blocks, and determine the first data block in data blocks of the M data blocks except the K data blocks;
wherein the second determining unit (103) is specifically configured to: perform a subtraction operation with the fixed step on reference counts of L data blocks, in the N data blocks, allocated for a checkpoint reserved at the moment of the previous checkpoint reclaim, and determine second reference counts of the L data blocks, wherein before the obtaining first reference counts of the K data blocks, reference counts of the N data blocks are first referential reference counts; and determine the second data block in the N data blocks according to the first reference counts, the second reference counts, and the first referential reference counts.

6. The apparatus according to claim 5, wherein the apparatus further comprises a third determining unit (105), wherein the third determining unit (105) is configured to determine a reference count of a data block that needs to be reserved for the current checkpoint reclaim as a current first referential reference count according to the first reference counts, the second reference counts, and the first referential reference counts.

7. The apparatus according to claim 5, wherein when the file system comprises a cut-off root area of the previous checkpoint reclaim, a cut-off root area of the current checkpoint reclaim, and a real-time root area, the cut-off root area of the previous checkpoint reclaim is a root area in which the N data blocks are indexed, the real-time root area is a root area in which the K data blocks are indexed, and the cut-off root area of the current checkpoint reclaim is a
root area in which the file system copies, when obtaining the checkpoint reclaim instruction, an indexing relationship that is in the real-time root area.

8. The apparatus according to claim 7, wherein the reclaim unit (104) is further specifically configured to: after the first data block and the second data block are reclaimed, delete data in the cut-off root area of the previous checkpoint reclaim, and copy data in the cut-off root area of the current checkpoint reclaim to the cut-off root area of the previous checkpoint reclaim.

## Patentansprüche

1. Fixpunktregenerierungsverfahren in einem Kopieren-beim-Schreiben-Dateisystem ("Copy-on-Write"-Dateisystem), das Folgendes umfasst:
Erhalten (S1) gemäß einer Fixpunktregenerierungsanweisung von M Datenblöcken, die durch das Dateisystem zwischen einem Zeitpunkt einer früheren Fixpunktregenerierung und einem Zeitpunkt einer aktuellen Fixpunktregenerierung zugewiesen worden sind, wobei M eine Ganzzahl nicht kleiner als 1 ist und die M Datenblöcke Datenblöcke sind, die für einen Fixpunkt und/oder einen Speicherauszug, der zwischen dem Zeitpunkt der früheren Fixpunktregenerierung und dem Zeitpunkt der aktuellen Fixpunktregenerierung erzeugt wird, zugewiesen worden sind;
Ausführen (S2) einer Additionsoperation mit einem festen Schritt auf einem Referenzzählwert eines Datenblocks, der in den M Datenblöcken reserviert werden muss, und Bestimmen in den M Datenblöcken eines ersten Datenblocks, der regeneriert werden muss;
Bestimmen (S3) in den N Datenblöcken, die für einen Fixpunkt und/oder einen Speicherauszug, der zu dem Zeitpunkt der frühere Fixpunktregenerierung reserviert ist, zugewiesen worden sind, eines zweiten Datenblocks, der regeneriert werden muss, wobei N eine Ganzzahl nicht kleiner als 1 ist; und
Regenerieren (S4) des ersten Datenblocks und des zweiten Datenblocks;
wobei das Ausführen der Additionsoperation mit einem festen Schritt auf einem Referenzzählwert eines Datenblocks, der in den M Datenblöcken reserviert werden muss, und Bestimmen in den M Datenblöcken eines ersten Datenblocks, der regeneriert werden muss, insbesondere Folgendes umfasst:
wenn nur ein Fixpunkt zwischen dem Zeitpunkt der früheren Fixpunktregenerierung und dem Zeitpunkt der aktuellen Fixpunktregenerierung erzeugt wird, Ausführen der Additionsoperation mit dem festen Schritt auf Referenzzählwerten von K Datenblöcken, die für einen neuesten aktuell erzeugten Fixpunkt zugewiesen worden sind, um erste Referenzzählwerte der K Datenblöcke zu erhalten; und Bestimmen des ersten Datenblocks in den Datenblöcken aus den M Datenblöcken außer den K Datenblöcken;
wenn sowohl ein Fixpunkt als auch ein Speicherauszug zwischen dem Zeitpunkt der früheren Fixpunktregenerierung und dem Zeitpunkt der aktuellen Fixpunktregenerierung erzeugt werden, Ausführen der Additionsoperation mit dem festen Schritt auf Referenzzählwerten von K Datenblöcken, die für den Speicherauszug zugewiesen worden sind, der zwischen dem Zeitpunkt der früheren Fixpunktregenerierung und dem Zeitpunkt der aktuellen Fixpunktregenerierung und
für einen neuesten aktuell erzeugten Fixpunkt erzeugt ist, um erste Referenzzählwerte der K Datenblöcke zu erhalten; und Bestimmen des ersten Datenblocks in den Datenblöcken aus den M Datenblöcken außer den K Datenblöcken;
wobei das Bestimmen in den N Datenblöcken, die für einen Fixpunkt und/oder einen Speicherauszug zugewiesen worden sind, die zu dem Zeitpunkt der früheren Fixpunktregenerierung reserviert sind, eines zweiten Datenblocks, der regeneriert werden muss, insbesondere Folgendes umfasst:
Ausführen einer Subtraktionsoperation mit dem festen Schritt auf Referenzzählwerten von L Datenblöcken in den N Datenblöcken, die für einen Fixpunkt zugewiesen worden sind, die zum Zeitpunkt der früheren Fixpunktregenerierung reserviert sind, und Bestimmen zweiter Referenzzählwerte der L Datenblöcke, wobei vor dem Erhalten der ersten Referenzzählwerte der K Datenblöcke die Referenzzählwerte der N Datenblöcke erste referenzielle Referenzzählwerte sind; und
Bestimmen des zweiten Datenblocks in den N Datenblöcken gemäß den ersten Referenzzählwerten den zweiten Referenzzählwerten und den ersten referenziellen Referenzzählwerten.

2. Verfahren nach Anspruch 1, wobei das Verfahren ferner Folgendes umfasst:
Bestimmen eines Referenzzählwerts eines Datenblocks, der für die aktuelle Fixpunktregenerierung reserviert werden muss, als einen aktuellen ersten referenziellen Referenzzählwert gemäß den ersten Referenzzählwerten, den zweiten Referenzzählwerten und den ersten referenziellen Referenzzählwerten.

3. Verfahren nach Anspruch 1, wobei dann, wenn das Dateisystem einen Abschneidewurzelbereich [engl: cut-off root area] der früheren Fixpunktregenerierung, einen Abschneidewurzelbereich der aktuellen Fixpunktregenerierung und einen Echtzeit-Wurzelbereich umfasst, der Abschneidewurzelbereich der früheren Fixpunktregenerierung ein Wurzelbereich ist, in dem die N Datenblöcke indexiert sind, der Echtzeit-Wurzelbereich ein Wurzelbereich ist, in dem die K Datenblöcke indexiert sind, und der Abschneidewurzelbereich der aktuellen Fixpunktregenerierung ein Wurzelbereich ist, in den das Dateisystem eine Indexierungsbeziehung, die in dem Echtzeit-Wurzelbereich ist, kopiert, wenn es die Fixpunktregenerierungsanweisung erhält.

4. Verfahren nach Anspruch 3, wobei das Verfahren nach dem Regenerieren des ersten Datenblocks und des zweiten Datenblocks ferner Folgendes umfasst:
Löschen von Daten in dem Abschneidewurzelbereich der früheren Fixpunktregenerierung; und
Kopieren von Daten in dem Abschneidewurzelbereich der aktuellen Fixpunktregenerierung in den Abschneidewurzelbereich der früheren Fixpunktregenerierung.

5. Fixpunktregenerierungsvorrichtung in einem Kopieren-beim-Schreiben-Dateisystem, die Folgendes umfasst:
eine Erhalteeinheit (101), die konfiguriert ist, gemäß einer Fixpunktregenerierungsanweisung M Datenblöcke zu erhalten, die durch das Dateisystem zwischen einem Zeitpunkt einer früheren Fixpunktregenerierung und
einem Zeitpunkt einer aktuellen Fixpunktregenerierung zugewiesen worden sind, wobei M eine Ganzzahl nicht kleiner als 1 ist und die M Datenblöcke Datenblöcke sind, die für einen Fixpunkt und/oder einen Speicherauszug, der zwischen dem Zeitpunkt der früheren Fixpunktregenerierung und dem Zeitpunkt der aktuellen Fixpunktregenerierung erzeugt wird, zugewiesen worden sind;
eine erste Bestimmungseinheit (102), die konfiguriert ist, eine Additionsoperation mit einem festen Schritt auf einem Referenzzählwert eines Datenblocks, der in den M Datenblöcken reserviert werden muss, auszuführen und in den M Datenblöcken einen ersten Datenblock zu bestimmen, der regeneriert werden muss;
eine zweite Bestimmungseinheit (103), die konfiguriert ist, in den N Datenblöcken, die für einen Fixpunkt und/oder einen Speicherauszug zu dem Zeitpunkt der früheren Fixpunktregenerierung zugewiesen worden sind, einen zweiten Datenblock zu bestimmen, der regeneriert werden muss, wobei N eine Ganzzahl nicht kleiner als 1 ist; und
eine Regenerierungseinheit (104), die konfiguriert ist, den ersten Datenblock und den zweiten Datenblock zu regenerieren;
wobei die erste Bestimmungseinheit (102) insbesondere konfiguriert ist: wenn nur ein Fixpunkt zwischen dem Zeitpunkt der früheren Fixpunktregenerierung und dem Zeitpunkt der aktuellen Fixpunktregenerierung erzeugt wird, die Additionsoperation mit dem festen Schritt auf Referenzzählwerten von K Datenblöcken, die für einen neuesten aktuell erzeugten Fixpunkt zugewiesen worden sind, auszuführen, um erste Referenzzählwerte der K Datenblöcke zu erhalten, und den ersten Datenblock in Datenblöcken aus den M Datenblöcken außer den K Datenblöcken zu bestimmen;
wenn sowohl ein Fixpunkt als auch ein Speicherauszug zwischen dem Zeitpunkt der früheren Fixpunktregenerierung und dem Zeitpunkt der aktuellen Fixpunktregenerierung erzeugt werden, die Additionsoperation mit dem festen Schritt auf Referenzzählwerten von K Datenblöcken, die für den Speicherauszug, der zwischen dem Zeitpunkt der früheren Fixpunktregenerierung und dem Zeitpunkt der aktuellen Fixpunktregenerierung erzeugt wird, und für einen neuesten aktuell erzeugten Fixpunkt zugewiesen worden sind, auszuführen, um erste Referenzzählwerte der K Datenblöcke zu erhalten, und den ersten Datenblock in den Datenblöcken aus den M Datenblöcken außer den K Datenblöcken zu bestimmen;
wobei die zweite Bestimmungseinheit (103) insbesondere konfiguriert ist: eine Subtraktionsoperation mit dem festen Schritt auf Referenzzählwerten von L Datenblöcken in den N Datenblöcken, die für einen Fixpunkt, der zum Zeitpunkt der früheren Fixpunktregenerierung reserviert ist, zugewiesen worden sind, auszuführen und zweite Referenzzählwerte der L Datenblöcke zu bestimmen, wobei vor dem Erhalten der ersten Referenzzählwerte der K Datenblöcke die Referenzzählwerte der N Datenblöcke erste referenzielle Referenzzählwerte sind; den zweiten Datenblock in den N Datenblöcken gemäß den ersten Referenzzählwerten den zweiten Referenzzählwerten und den ersten referenziellen Referenzzählwerten zu bestimmen.

6. Vorrichtung nach Anspruch 5, wobei die Vorrichtung ferner eine dritte Bestimmungseinheit (105) umfasst, wobei die dritte Bestimmungseinheit (105) konfiguriert ist, einen Referenzzählwert eines Datenblocks, der für die aktuellen Fixpunktregenerierung reserviert werden muss, als einen aktuellen ersten referenziellen Referenzzählwert gemäß den ersten Referenzzählwerten, den zweiten Referenzzählwerten und den ersten referenziellen Referenzzählwerten zu bestimmen.

7. Vorrichtung nach Anspruch 5, wobei dann, wenn das Dateisystem einen Abschneidewurzelbereich der früheren Fixpunktregenerierung, einen Abschneidewurzelbereich der aktuellen Fixpunktregenerierung und einen Echtzeit-Wurzelbereich umfasst, der Abschneidewurzelbereich der früheren Fixpunktregenerierung ein Wurzelbereich ist, in dem die N Datenblöcke indexiert sind, der Echtzeit-Wurzelbereich ein Wurzelbereich ist, in dem die K Datenblöcke indexiert sind, und der Abschneidewurzelbereich der aktuellen Fixpunktregenerierung ein Wurzelbereich ist, in den das Dateisystem eine Indexierungsbeziehung, die in dem Echtzeit-Wurzelbereich ist, kopiert, wenn es die Fixpunktregenerierungsanweisung erhält.

8. Vorrichtung nach Anspruch 7, wobei die Regenerierungseinheit (104) ferner insbesondere konfiguriert ist: nachdem der erste Datenblock und der zweite Datenblock regeneriert sind, Daten in dem Abschneidewurzelbereich der früheren Fixpunktregenerierung zu löschen und Daten in dem Abschneidewurzelbereich der aktuellen Fixpunktregenerierung in den Abschneidewurzelbereich der früheren Fixpunktregenerierung zu kopieren.

## Revendications

1. Procédé de récupération de point de contrôle dans un système de fichier de copie sur écriture, comprenant les étapes suivantes :
obtenir (S1), selon une instruction de récupération de point de contrôle, M blocs de données attribués par le système de fichier entre un moment d'une récupération de point de contrôle précédent et un moment d'une récupération de point de contrôle actuel, M étant un nombre entier non inférieur à 1, et les M blocs de données étant des blocs de données attribués pour au moins un élément parmi un point de contrôle ou un instantané généré entre le moment de la récupération de point de contrôle précédent et le moment de la récupération de point de contrôle actuel ;
exécuter (S2) une opération d'addition avec une étape fixe sur un compte de référence d'un bloc de données qui doit être réservé dans les M blocs de données, et
déterminer, dans les M blocs de données, un premier bloc de données qui doit être récupéré ;
déterminer (S3), dans N blocs de données attribués pour au moins un élément parmi un point de contrôle ou un instantané réservé au moment de la récupération de point de contrôle précédent, un deuxième bloc de données qui doit être récupéré, N étant un nombre entier non inférieur à 1 ; et
récupérer (S4) le premier bloc de données et le deuxième bloc de données ;
les étapes consistant à exécuter une opération d'addition avec une étape fixe sur un compte de référence d'un bloc de données qui doit être réservé dans les M blocs de données, et à déterminer, dans les M blocs de données, un premier bloc de données qui doit être récupéré spécifiquement comprenant :
lorsque seul un point de contrôle est généré entre le moment de la récupération de point de contrôle précédent et le moment de la récupération de point de contrôle actuel, exécuter l'opération d'addition avec l'étape fixe sur des comptes de référence de K blocs de données attribués pour un dernier point de contrôle généré actuellement, pour obtenir des premiers comptes de référence des K blocs de données ; et déterminer le premier bloc de données dans les blocs de données des M blocs de données excepté les K blocs de données ;
lorsqu'à la fois un point de contrôle et un instantané sont générés entre le moment de la récupération de point de contrôle précédent et le moment de la récupération de point de contrôle actuel, exécuter l'opération d'addition avec l'étape fixe sur des comptes de référence de K blocs de données attribués pour l'instantané généré entre le moment de la récupération de point de contrôle précédent et le moment de la récupération de point de contrôle actuel et pour un dernier point de contrôle généré actuellement, pour obtenir des premiers comptes de référence des K blocs de données ; et déterminer le premier bloc de données dans les blocs de données des M blocs de données excepté les K blocs de données ;
l'étape consistant à déterminer, dans N blocs de données attribués pour au moins un élément parmi un point de contrôle ou un instantané réservé au moment de la récupération de point de contrôle précédent, un deuxième bloc de données qui doit être récupéré spécifiquement comprenant :
exécuter une opération de soustraction avec l'étape fixe sur des comptes de référence de L blocs de données, dans les N blocs de données, attribués pour un point de contrôle réservé au moment de la récupération de point de contrôle précédent, et déterminer des deuxièmes comptes de référence des L blocs de données, avant l'étape consistant à obtenir des premiers comptes de référence des K blocs de données, des comptes de référence des N blocs de données étant des premiers comptes de référence référentiels ; et
déterminer le deuxième bloc de données dans les N blocs de données selon les premiers comptes de référence, les deuxièmes comptes de référence, et les premiers comptes de référence référentiels.

2. Procédé selon la revendication 1, comprenant en outre :
déterminer un compte de référence d'un bloc de données qui doit être réservé pour la récupération de point de contrôle actuel comme un premier compte de référence référentiel actuel selon les premiers comptes de référence, les deuxièmes comptes de référence, et les premiers comptes de référence référentiels.

3. Procédé selon la revendication 1, dans lequel, lorsque le système de fichier comprend une zone racine de coupure de la récupération de point de contrôle précédent, une zone racine de coupure de la récupération de point de contrôle actuel, et une zone racine en temps réel, la zone racine de coupure de la récupération de point de contrôle précédent est une zone racine dans laquelle les N blocs de données sont indexés, la zone racine en temps réel est une zone racine dans laquelle les K blocs de données sont indexés, et la zone racine de coupure de la récupération de point de contrôle actuel est une zone racine dans laquelle le système de fichier copie, lors de l'obtention de l'instruction de récupération de point de contrôle, une relation d'indexage qui est dans la zone racine en temps réel.

4. Procédé selon la revendication 3 dans lequel, après l'étape consistant à récupérer le premier bloc de données et le deuxième bloc de données, le procédé comprend en outre :
supprimer des données dans la zone racine de coupure de la récupération de point de contrôle précédent ; et
copier des données dans la zone racine de coupure de la récupération de point de contrôle actuel dans la zone racine de coupure de la récupération de point de contrôle précédent.

5. Appareil de récupération de point de contrôle dans un système de fichier de copie sur écriture, comprenant :
une unité d'obtention (101), configurée pour obtenir, selon une instruction de récupération de point de contrôle, M blocs de données attribués par le système de fichier entre un moment d'une récupération de point de contrôle précédent et un moment d'une récupération de point de contrôle actuel, M étant un nombre entier non inférieur à 1, et les M blocs de données étant des blocs de données attribués pour au moins un élément parmi un point de contrôle ou un instantané généré entre le moment de la récupération de point de contrôle précédent et le moment de la récupération de point de contrôle actuel ;
une première unité de détermination (102), configurée pour exécuter une opération d'addition avec une étape fixe sur un compte de référence d'un bloc de données qui doit être réservé dans les M blocs de données, et déterminer, dans les M blocs de données, un premier bloc de données qui doit être récupéré ;
une deuxième unité de détermination (103), configurée pour déterminer, dans N blocs de données attribués pour au moins un élément parmi un point de contrôle ou un instantané réservé au moment de la récupération de point de contrôle précédent, un deuxième bloc de données qui doit être récupéré, N étant un nombre entier non inférieur à 1 ; et
une unité de récupération (104), configurée pour récupérer le premier bloc de données et le deuxième bloc de données ;
la première unité de détermination (102) étant configurée spécifiquement pour:
lorsque seul un point de contrôle est généré entre le moment de la récupération de point de contrôle précédent et le moment de la récupération de point de contrôle actuel, exécuter l'opération d'addition avec l'étape fixe sur des comptes de référence de K blocs de données attribués pour un dernier point de contrôle généré actuellement, pour obtenir des premiers comptes de référence des K blocs de données, et déterminer le premier bloc de données dans les blocs de données des M blocs de données excepté les K blocs de données ; lorsqu'à la fois un point de contrôle et un instantané sont générés entre le moment de la récupération de point de contrôle précédent et le moment de la récupération de point de contrôle actuel, exécuter l'opération d'addition avec l'étape fixe sur des comptes de référence de K blocs de données attribués pour l'instantané généré entre le moment de la récupération de point de contrôle précédent et le moment de la récupération de point de contrôle actuel et pour un dernier point de contrôle généré actuellement, pour obtenir des premiers comptes de référence des K blocs de données, et déterminer le premier bloc de données dans les blocs de données des M blocs de données excepté les K blocs de données ;
la deuxième unité de détermination (103) étant configurée spécifiquement pour: exécuter une opération de soustraction avec l'étape fixe sur des comptes de référence de L blocs de données, dans les N blocs de données, attribués pour un point de contrôle réservé au moment de la récupération de point de contrôle précédent, et déterminer des deuxièmes comptes de référence des L blocs de données, avant l'étape consistant à obtenir des premiers comptes de référence des K blocs de données, des comptes de référence des N blocs de données étant des premiers comptes de référence référentiels ; et déterminer le deuxième bloc de données dans les N blocs de données selon les premiers comptes de référence, les deuxièmes comptes de référence, et les premiers comptes de référence référentiels.

6. Appareil selon la revendication 5, dans lequel l'appareil comprend en outre une troisième unité de détermination (105), la troisième unité de détermination (105) étant configurée pour déterminer un compte de référence d'un bloc de données qui doit être réservé pour la récupération de point de contrôle actuel comme un premier compte de référence référentiel actuel selon les premiers comptes de référence, les deuxièmes comptes de référence, et les premiers comptes de référence référentiels.

7. Appareil selon la revendication 5, dans lequel, lorsque le système de fichier comprend une zone racine de coupure de la récupération de point de contrôle précédent, une zone racine de coupure de la récupération de point de contrôle actuel, et une zone racine en temps réel, la zone racine de coupure de la récupération de point de contrôle précédent est une zone racine dans laquelle les N blocs de données sont indexés, la zone racine en temps réel est une zone racine dans laquelle les K blocs de données sont indexés, et la zone racine de coupure de la récupération de point de contrôle actuel est une zone racine dans laquelle le système de fichier copie, lors de l'obtention de l'instruction de récupération de point de contrôle, une relation d'indexage qui est dans la zone racine en temps réel.

8. Appareil selon la revendication 7, dans lequel l'unité de récupération (104) est en outre configurée spécifiquement pour : après que le premier bloc de données et le deuxième bloc de données ont été récupérés, supprimer des données dans la zone racine de coupure de la récupération de point de contrôle précédent, et copier des données dans la zone racine de coupure de la récupération de point de contrôle actuel dans la zone racine de coupure de la récupération de point de contrôle précédent.
